Europäisches Patentamt

European Patent Office

Office européen des brevets

(19)

(11) Veröffentlichungsnummer: **0 088 150**
**B1**

(12) # EUROPÄISCHE PATENTSCHRIFT

(45) Veröffentlichungstag der Patentschrift:
03.09.86

(21) Anmeldenummer: 82106277.5

(22) Anmeldetag: 14.07.82

(51) Int. Cl.⁴: **F 16 H 3/78**

(54) **Unter Last schaltbare mechanische Getriebeanordnung.**

(30) Priorität: 05.03.82 DE 3207938

(43) Veröffentlichungstag der Anmeldung:
14.09.83 Patentblatt 83/37

(45) Bekanntmachung des Hinweises auf die Patenterteilung:
03.09.86 Patentblatt 86/36

(84) Benannte Vertragsstaaten:
DE FR GB IT

(56) Entgegenhaltungen:
DE-A-3 100 465
US-A-4 015 486

(73) Patentinhaber: ZAHNRÄDERFABRIK RENK
AKTIENGESELLSCHAFT, Gögginger Strasse 71 -
83, D-8900 Augsburg (DE)

(72) Erfinder: Reppert, Rudi, Ing. grad., Panoramaweg
14, D-8958 Füssen (DE)
Erfinder: Kugler, Artur, A.- Droste- Hülshoff-
Strasse 28, D-8900 Augsburg (DE)
Erfinder: Zaunberger, Franz Xaver, Zieglerstrasse
10, D-8900 Augsburg (DE)

EP 0 088 150 B1

## Beschreibung

Die Erfindung betrifft eine unter Last schaltbare mechanische Getriebeanordnung mit einem unter Last schaltbaren mechanischen Gangwechselgetriebe. Insbesondere handelt es sich um eine rein mechanische, unter Last schaltbare Getriebeanordnung für Antriebsmaschinen bzw. Motoren mit extrem großen rotierenden Schwungmassen, beispielsweise Gasturbinen, die beim Schaltvorgang der unter Last schaltbaren Getriebeanordnung eine rasche Drehzahländerung erfahren.

Bei den bekannten, unter Last schaltbaren Getriebeanordnungen (DE-A-3 100 465) erfolgt die Synchronisierung der antriebsseitigen rotierenden Schwungmassen, d.h. im wesentlichen der Massen der Antriebsmaschine, beim Gangwechsel über die Schaltelemente der Getriebeanordnung. Bei diesen Schaltelementen handelt es sich normalerweise um Lamellenkupplungen der einzelnen Gangstufen. Bei solchen Getrieben ist es bei Anwendung von Antriebsmaschinen mit großen Schwungmassen erforderlich, die Schaltelemente für alle Gangstufen entsprechend groß zu dimensionieren, was zu großem Bauvolumen, hohen Gewichten und entsprechend höheren Leerlaufverlusten, bzw. schlechteren Übertragungswirkungsgraden führt.

Es gibt bereits Getriebeanordnungen mit unter Last schaltbarem Gangwechselgetriebe, welchem eine hydrodynamische Kupplung vorgeschaltet ist. Da letztere nicht schlupffrei arbeiten kann, ist eine sie überbrückende mechanische Überbrückungskupplung erforderlich. Die hydrodynamische Kupplung übernimmt einen Teil der Synchronisierarbeit des Gangwechselgetriebes, weil ihr Schlupf zwischen ihren primären und sekundären Teilen sich nach der anliegenden Drehmomentbelastung richtet. Eine gezielte Steuerung oder Regelung der Synchronisierarbeit, abgestimmt auf das Gangwechselgetriebe, findet dabei nicht statt.

Durch die Erfindung soll die Aufgabe gelöst werden, eine möglichst klein und gewichtsmäßig leicht bauende, rein mechanische, unter Last schaltbare Getriebeanordnung mit hohem Übertragungswirkungsgrad, vorzugsweise für Fahrzeugantriebe, zu schaffen, die es gestattet, auch bei Verwendung von Antriebsmaschinen mit großen rotierenden Schwungmassen den Gangwechsel ohne völlige Unterbrechung des Antriebsdrehmoments, bzw. der Zugkraft oder Bremskraft, und möglichst ohne oder nur geringfügige Beeinflussung, normalerweise Zurücknahme, der Leistung der Antriebsmaschine durchzuführen. Diese beispielsweise durch das Gaspedal beeinflußbare Antriebsleistung der Antriebsmaschine wird im folgenden als Lastdrehmoment bezeichnet. Während eines Schaltvorganges wirkt auf die Getriebeanordnung normalerweise nicht nur dieses Lastdrehmoment der Antriebsmaschine, sondern auch deren abzubremsendes oder zu beschleunigendes Trägheitsmoment.

Diese Aufgabe wird gemäß dem Kennzeichen des Hauptanspruches in Kombination mit den Merkmalen von dessen Oberbegriff gelöst.

Entsprechend wird gemäß der Erfindung dem eigentlichen, unter Last schaltbaren Mehrgang-Gangwechselgetriebe ein Synchronisierelement vorgeschaltet, vorzugsweise eine mechanische Kupplung, beispielsweise eine Lamellenkupplung, jedoch kann auch eine hydrostatische Kupplung verwendet werden. Das übertragbare Drehmoment wird automatisch so gesteuert oder geregelt, daß es beim Gangwechsel, also während des Schaltvorganges, länger im Schlupfbetrieb arbeitet und dadurch mehr Synchronisierarbeit übernimmt als die Schaltelemente des Gangwechselgetriebes. Dadurch können diese Schaltelemente wesentlich kleiner, leichter und billiger ausgeführt werden als bei den bekannten Getriebeanordnungen, die unter Last schaltbar sind. Dadurch ergibt sich insgesamt auch eine kleinere Getriebeanordnung. Die Einsparung ist größer als der Mehraufwand für das zusätzliche Synchronisierelement. Mit "übertragbarem Drehmoment" des Synchronisierelements, der Schaltelemente und allgemein von Kupplungen und Bremsen sowie ähnlichen Geräten ist dasjenige Drehmoment zu verstehen, bei welchem das betreffende Gerät das angelegte Drehmoment schlupffrei von einem primären Teil auf einen sekundären Teil übertragen kann.

Die Getriebeanordnung gemäß der Erfindung ermöglicht, einen großen Anteil der beim Schaltvorgang aufzubringenden Synchronisierarbeit auf das Synchronisierelement zu verlagern und dadurch die von den Schaltelementen des Gangwechselgetriebes zu synchronisierenden Schwungmassen klein zu halten. Die Schaltelemente, vorzugsweise Lamellenkupplungen, des unter Last schaltbaren Gangwechselgetriebes können daher leicht, für nur kurze Rutschzeiten mit relativ kleinen Reibflächen und somit geringsten Leerlaufverlusten ausgelegt werden. Die Synchronisierarbeit zum Angleichen der Drehzahl der Antriebsmaschine an die dem Schaltvorgang geänderte Drehzahl des Gangwechselgetriebes wird im wesentlichen von dem vorgeschalteten Synchronisierelement übernommen, welches für einen längeren Schlupfbetrieb ausgelegt ist. Schlupfbetrieb bedeutet hierbei, daß ein primärer Teil zwar mit einem sekundären Teil des Synchronisierelementes verbunden ist, jedoch die beiden Teile relativ zueinander sich drehen können. Das Synchronisierelement kann eine hydrostatische Kupplung oder auch eine mechanische Kupplung sein, vorzugsweise eine Rutschkupplung, welche för entsprechend längere Rutschzeiten entsprechend dem genannten Schlupfbetrieb ausgelegt ist. Ein vergrößerter Übertragungsquerschnitt und vergrößerte Drehzahlen zwischen primärem und sekundärem Teil des Synchronisierelementes führen zu keiner Verschlechterung des Übertragungswirkungsgrades, da das Synchronisierelement im normalen Fahrbetrieb immer geschlossen ist und somit darin keine Leerlaufverluste entstehen.

Vorzugsweise erfolgt gemäß der Erfindung die Steuerung oder Regelung des übertragbaren Drehmoments des Synchronisierelementes automatisch in Abhängigkeit vom Leistungsregler bzw. der Gaspedalstellung der Antriebsmaschine und vom Gangwechsel im Gangwechselgetriebe. Die Steuerung bzw. Regelung kann mit hydraulischen, pneumatischen, elektrischen oder elektronischen Einrichtungen erfolgen.

Im Rahmen der Erfindung können als Synchronisierelement auch Stützelemente oder Schaltelemente von Getriebeeinheiten verwendet werden, welche dem Gangwechselgetriebe vorgeschaltet sind. Solche vorschalt Getriebe können Übersetzungsgetriebe, Untersetzungsgetriebe, Wendegetriebe oder Gruppengetriebe sein. Deren Stütz- oder Schaltelemente sind normalerweise Reibungskupplungen oder Bremsen.

Mehrere Ausführungsformen der Erfindung werden im folgenden mit Bezug auf die Zeichnungen als Beispiele beschrieben. Davon zeigen

Fig. 1 eine schematische Seitenansicht mit im Schnitt dargestelltem Gehäuse einer Getriebeanordnung nach der Erfindung,

Fig. 2 eine weitere Ausführungsform nach der Erfindung in Seitenansicht,

Fig. 3 eine schematische Seitenansicht, teilweise im Schnitt, einer nochmals weiteren Ausführungsform nach der Erfindung, und

Fig. 4 eine besondere Ausführungsform nach der Erfindung.

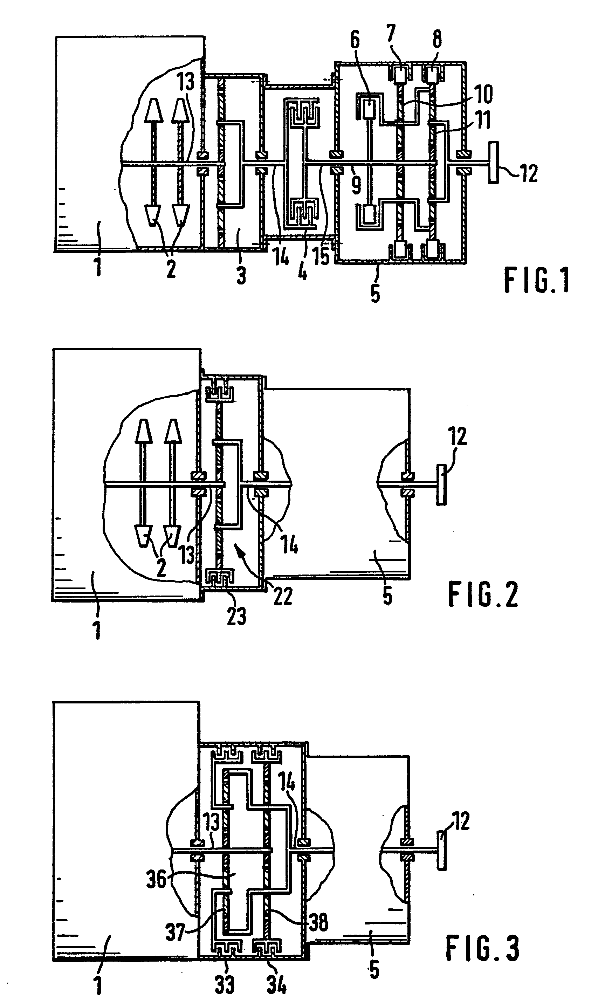

Fig. 1 zeigt eine Antriebsmaschine 1, beispielsweise in Form einer zwei Wellen aufweisenden Gasturbine mit den Arbeitsturbinenrädern 2, die wegen der hohen Betriebsdrehzahlen eine große Schwungenergie haben. Die Antriebsmaschine 1 treibt über ein Untersetzungsgetriebe 3 und ein für hohe Synchronisierarbeit ausgelegtes Synchronisierelement 4 in Form einer Kupplung ein Gangwechselgetriebe 5. Dieses enthält die kupplungsartig oder bremsenartig ausgebildeten Schaltelemente 6, 7 und 3 sowie Planetengetriebesätze 10 und 11, über welche eine Getriebeeingangswelle 9 mit einer Getriebeabtriebswelle 12 verbindbar ist. Das Gangwechselgetriebe 5 ist unter Last schaltbar, d.h. ohne Unterbrechung des Antriebsstranges 3, 4 zwischen Antriebsmaschine 1 und diesem Gangwechselgetriebe 5. Beim Stand der Technik ist das Synchronisierelement 4 nicht vorhanden, so daß während des Schaltvorganges das Lastdrehmoment der Antriebsmaschine 1 und deren Schwungenergie von der Getriebeeingangswelle 9 und den Schaltelementen 6, 7 und 3 aufgefangen werden muß, wobei während des Schaltvorganges die Getriebeeingangswelle 9 eine andere Drehzahl erhält und wegen ihrer Verbindung mit der Antriebsmaschine 1 auch diese Antriebsmaschine 1 in gleicher Weise auf eine andere Drehzahl gebracht werden muß. Ob dabei Schwungenergie aufgebracht oder vernichtet wird, hängt davon ab, ob in einen niedrigeren oder höheren Gang geschaltet wird. Somit erfolgte der Drehzahlausgleich zwischen Getriebeeingangswelle 9 und Getriebeabtriebswelle 12 lediglich durch die Schaltelemente 6,7 und 8. Diese, und auch die Getriebeeingangswelle 9, müssen deshalb entsprechend stark ausgebildet sein. Mit dem vorgenannten Lastdrehmoment ist das Drehmoment an der Abtriebswelle 13 der Antriebsmaschine gemeint, welches aufgrund der eingestellten Antriebsleistung, also bei einem Verbrennungsmotor die Einstellung des Gaspedales, erzeugt wird. Bei einem unter Last schaltbarem Gangwechselgetriebe 5 bleibt das Lastdrehmoment bzw. die Gaspedalstellung während eines Schaltvorganges unverändert erhalten oder wird nur geringfügig verändert, was eine entsprechend hohe Belastung der Schaltelemente 6, 7 und 8 zur Folge hat. Hinzu kommt die genannte Schwungenergie durch die beim Schaltvorgang auftretenden Drehzahländerungen.

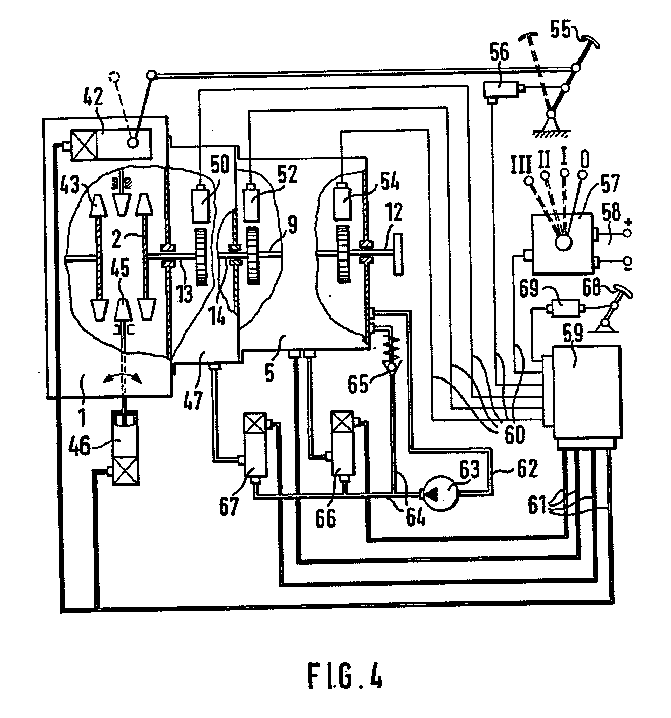

Gemäß der Erfindung ist das Synchronisierelement 4 vorgesehen. Die Darstellungen in den Zeichnungen sind nur symbolisch. Bei dem Synchronisierelement kann es sich um eine Kupplung oder eine bremsenartige Verbindung oder eine hydrostatische Kupplung handeln, welche alle einen Betrieb ohne Schlupf zwischen dem primären Teil 14 und dem sekundären Teil 15 des Synchronisierelementes 4 gestatten. Dazu gehören nicht hydrodynamische Kupplungen. Das Synchronisierelement 4 wird in einer mit Bezug auf Fig. 4 noch näher beschriebenen Weise derart gesteuert oder geregelt, daß die Antriebsverbindung zwischen primärem Teil 14 und sekundärem Teil 15 bei normalem Fahrbetrieb schlupffrei ist und auch während Schaltvorgängen nie vollständig unterbrochen wird. Dies bedeutet, daß auch während Schaltvorgängen das Synchronisierelement stets so eingestellt wird, daß es ein bestimmtes Mindestdrehmoment übertragen kann. Dabei wird die bei einem Schaltvorgang erforderliche Synchronisierarbeit zum überwiegenden Teil, beispielsweise zu 30 %, auf das Synchronisierelement 4 verlagert, während nur noch die restliche Synchronisierarbeit von den Schaltelementen 6, 7 und 3 aufzubringen ist. Diese können somit während eines Schaltvorganges verhältnismäßig schnell geöffnet oder geschlossen werden, so daß sie nur während kurzer Zeit mit Schlupf arbeiten. Dadurch können sie wesentlich kleiner als die Schaltelemente bekannter unter Last schaltbarer Gangwechselgetriebe ausgebildet sein. Ebenso verringert sich die Spitzenbelastung der Getriebeeingangswelle 9, so daß auch sie massenarm ausgeführt werden kann. Ein Schaltvorgang läuft in der Weise ab, daß das Synchronisierelement 4 auf ein kleineres übertragbares Drehmoment eingestellt wird als die den Schaltvorgang bewirkenden Schaltelemente 6, 7 bzw. 8. Dadurch tritt zwischen der Drehbewegung des primären Teils 14 und des sekundären Teils 15 des Synchronisierelementes 4 ein Schlupf auf, wenn im Gangwechselgetriebe 5 ein Schaltvorgang stattfindet, so daß für diesen Schaltvorgang im Gangwechselgetriebe 5 das betreffende Schaltelement 6 bzw. 7 bzw. 8 mit kurzer Schlupfzeit geöffnet und das betreffende andere Schaltelement 6 bzw. 7 bzw. 8 mit kurzer Schlupfzeit geschlossen werden kann und dabei die Drehzahl der Getriebeeingangswelle 9 auf die neue Drehzahl gebracht werden kann, ohne daß in dieser gleichen kurzen Zeit auch die Abtriebswelle 13 der Antriebsmaschine 1 auf die neue Drehzahl gebracht wird. Die Abtriebswelle 13 der Antriebsmaschine 1 wird über den Schlupfbetrieb des Synchronisierelementes 4 während einer wesentlich längeren Zeitdauer an die neue Drehzahl der Getriebeeingangswelle 9 angepaßt. Die Synchronisierarbeit der Schaltelemente 6, 7 und 8 besteht also im wesentlichen nur noch in der Synchronisierung der geringen Schwungenergie der Getriebeeingangswelle 9 und, weil das Synchronisierelement 4 nicht vollständig entkuppelt, einem kleinen Synchronisieranteil der großen Schwungenergie der Antriebsmaschine 1, während der größere Anteil der Schwungenergie der Antriebsmaschine 1 vom Synchronisierelement 4 verarbeitet wird. Durch die Aufteilung der Synchronisierarbeit können die Schaltelemente 6, 7 und 8 wesentlich kleiner, billiger und gewichtsmäßig leichter ausgebildet werden als bei bekannten unter Last schaltbaren Gangwechselgetrieben. Die Einsparung ist wesentlich größer als der Aufwand für das Synchronisierelement 4.

Bei den weiteren Ausführungsformen der Erfindung nach den Figuren 2, 3 und 4 sind gleiche oder ähnliche Teile wie in Fig. 1 wieder mit gleichen Bezugszahlen versehen.

Fig. 2 zeigt eine Ausführungsform, bei welcher ein Stützelement 23 eines Untersetzungsgetriebes 22 als Synchronisierelement für die Turbinenräder 2 ausgebildet ist, um bei einem Gangwechsel bzw. während eines Schaltvorganges im Gangwechselgetriebe 5 einen Teil der dabei erforderlichen Synchronisierarbeit zu übernehmen. Das Stützelement 23 hat in bekannter Weise die Form einer Lamellenkupplung, kann jedoch auch die Form einer Bandbremse haben. Der primäre Teil 13 des Synchronisierelementes 23 ist die Antriebswelle und der sekundäre Teil 14 dieses Synchronisierelementes 23 ist die Abtriebswelle des als planetenradgetriebe ausgebildeten Untersetzungsgetriebes 22.

Fig. 3 zeigt eine Ausführungsform nach der Erfindung, bei welcher Schaltelemente 33 und 34 eines dem Gangwechselgetriebe 5 vorgeschalteten Planetenwendegetriebes 36 als Synchronisierelemente für die Turbinenräder der Antriebsmaschine 1 ausgebildet sind. Die Schaltelemente 33 und 34 können Lamellenkupplungen oder Bandbremsen oder dergleichen sein. Die Synchronisierelemente 33 und 34 sind wechselweise wirksam, je nach dem, ob das Planetenwendegetriebe 36 auf Vorwärtsfahrt oder auf Rückwärtsfahrt geschaltet ist. Dazu beinhaltet das planetenwendegetriebe 6 zwei hintereininder geschaltete Planetengetriebestufen 37 und 38. Für beide Synchronisierelemente 33 und 34 ist der primäre Teil 13 die Eingangswelle und der sekundäre Teil 14 die Ausgangswelle des Planetenwendegetriebes 36.

In gleicher Weise wie bei der Ausführungsform nach Fig. 1 sind auch beiden den Figuren 2 und 3 die Synchronisierelemente 23 bzw. 33 bzw. 34 bei normalem Fahrbetrieb jeweils vollständig geschlossen und werden auch während eines Schaltvorganges nicht geöffnet sondern nur auf Schlupfbetrieb mit einem bestimmten mindest-übertragbaren Drehmoment geschaltet. Die Funktionsweise ist somit folgende: Bei einem für einen Gangwechsel erforderlichen Schaltvorgang wird das übertragbare Drehmoment des dem Gangwechselgetriebe vorgeschalteten Synchronisierelements, also die Schließkraft des Synchronisierelements, unter das Rutschdrehmoment der Schaltelemente im Gangwechselgetriebe, bezogen auf die Welle des Synchronisierelementes, entsprechend abgesenkt, jedoch nicht auf Null gebracht, damit eine völlige Unterbrechung der Zugkraft vermieden wird. Nach erfolgtem Schaltvorgang im Gangwechselgetriebe wird zum Angleichen der Drehzahl der Antriebsmaschine an die neue Drehzahl der Eingangswelle des Gangwechselgetriebes das übertragbare Drehmoment des Synchronisierelements bis über das jeweilige Lastdrehmoment der Antriebsmaschine erhöht. Das Lastdrehmoment ist das an der Antriebsmaschine 1 beispielsweise durch Gaspedalstellung eingestellte Drehmoment ohne die Schwungenergie der Antriebsmaschine. Gemäß der Erfindung ist es vorteilhaft, die Rutschdrehmomente oder Schlupfdrehmomente des Synchronisierelements in Abhängigkeit von der Drehzahl und dem jeweiligen Drehmoment der Antriebsmaschine so zu steuern oder zu regeln, daß beim Schaltvorgang im Antriebsstrang zwischen Antriebsmaschine und Gangwechselgetriebe, gegenüber dem jeweiligen Lastdrehmoment der Antriebsmaschine, keine zu große Drehmomenterhöhung und andererseits keine zu lange Rutschzeit oder Schlupfbetriebszeit im Synchronisierelement entstehen. Die Beeinflussung der übertragbaren Drehmomente kann in bekannter Weise durch Regulierung der Betätigungsdrücke des Synchronisierelements und der Schaltelemente erfolgen. Auch kann gleichzeitig in bekannter Weise, wenn die Antriebsmaschine dazu geeignet ist, teilweise eine automatische Rücknahme der Antriebsleistung erfolgen.

Fig. 4 zeigt eine Ausführungsform einer Steuer- und Regeleinrichtung für die Funktionsweise einer Getriebeanordnung nach der Erfindung mit automatisch gesteuertem Synchronisierelement. Die Antriebsmaschine 1, beispielsweise eine Gasturbine mit zwei Wellen, enthält eine Arbeitsturbine 2, eine Gaserzeugerturbine 43, ein verstellbares Leitgitter 45, einen Leistungsregler 42 und eine Verstelleinrichtung 46 für das Leitgitter 45. Ferner ist ein Synchronisierelement 47, ähnlich den Synchronisierelementen der Figuren 1, 2 und 3, und ein Gangwechselgetriebe 5 vorgesehen. In der Antriebsverbindung zwischen der Antriebsmaschine 1 und dem Synchronisierelement 47, beispielsweise an deren primärem Teil 13, befindet sich ein Drehzahlsensor 50. In der Antriebsverbindung zwischen dem Synchronisierelement 47 und dem Gangwechselgetriebe 5, beispielsweise auf der Eingangswelle 9, befindet sich ein Drehzahlsensor 52. Ferner befindet sich an der Abeabtriebswelle 12 des Gangwechselgetriebes 5 ein Drehzahlsensor 54. Der Leistungsregler 42 der Antriebsmaschine 1 wird von einem Gaspedal 55 betätigt, mit welchem ein Sensor 56 gekoppelt ist, welcher die Stellung des Gaspedals 55 und damit auch die Antriebsleistung bzw. das Lastdrehmoment der Antriebsmaschine 1 erfaßt. Ein Gangwahlschalter 57 wird von einer Stromquelle 58 mit Strom versorgt und ist an ein elektronisches Steuer- und Regelgerät 59 angeschlossen. Dieses ist vorzugsweise ein Mikroprozessor. An die Eingänge des Steuer- und Regelgerätes 59 sind außerdem über Eingangsleitungen 60 die Drehzahlsensoren 50, 52 und 54 sowie der Sensor 56 für die Antriebsleistung angeschlossen. Ferner ist über eine Eingangsleitung 60 von einer Bremsbetätigungseinrichtung ein Sensor 69 eines Bremspedals 68 angeschlossen.

Ausgangsleitungen 61 des Steuer- und Regelgerätes 59 führen zu Steuerelementen einer Hydraulikanlage. Diese Steuerelemente bestehen im wesentlichen aus einer mit dem Gangwechselgetriebe 5 verbundenen Saugleitung 62, einer darin angeordneten Druckpumpe 63, Überdruck- und Rücklaufleitungen 64 mit einem Überdruckventil 65, einem elektrisch-hydraulischen Druckregelventil 66 zur Betätigung der Schaltelemente des Gangwechselgetriebes 5, einem elektrisch-hydraulischen Druckregelventil 67 für das Synchronisierelement 47 und der bereits genannten elektrisch-pneumatischen Verstelleinrichtung 46 sowie dem Leistungsregler 42 der Antriebsmaschine 1.

Funktionsweise: Bei einem vom Fahrer über den Gangwahlschalter 57 oder bei einem vom Steuer- und Regelgerät 59 durch die Signale der Sensoren 54 und 56 automatisch über die Ausgangsleitungen 21 ausgelösten Schaltvorgang wird gemäß der Erfindung durch das Druckregelventil 67 der Betätigungsdruck, und damit das übertragbare Drehmoment, des Synchronisierelementes 47 so geregelt, daß es beim Schaltvorgang während eines Gangwechsels im Gangwechselgetriebe 5 unter das übertragbare Drehmoment, und damit unter das Rutschdrehmoment, der Schaltelemente des Gangwechselgetriebes 5 absinkt, und daß anschließend erst nach erfolgter Umschaltung, also nach erfolgtem Schaltvorgang, das übertragbare Drehmoment des Synchronisierelementes 47 über das jeweilige Lastdrehmoment der Antriebsmaschine 1, jedoch weiterhin unterhalb des übertragbaren Drehmoments der Schaltelemente angehoben wird. Vorzugsweise erfolgt diese Funktionsweise gleichzeitig auch in Abhängigkeit von den Signalen der Sensoren 50 und 52.

Außerdem ist es möglich, falls die Antriebsmaschine 1 dazu geeignet ist, während des Schalt- und Synchronisiervorganges das Lastdrehmoment, also die vorgegebene Antriebsleistung, der Antriebsmaschine 1 durch das Steuerund Regelgerät automatisch zu beeinflussen. Diese Beeinflussung kann, je nach dem, ob im Gangwechselgetriebe 5 heraufgeschaltet oder heruntergeschaltet wird, in einer Erhöhung des Lastdrehmomentes, meistens jedoch in einer Verringerung des Lastdrehmomentes der Antriebsmaschine 1 bestehen. Diese Einstellung des Lastdrehmoments erfolgt über das Steuer- und Regelgerät 59 vorzugsweise über die Verstelleinrichtung 46 und damit durch Einstellung des Leitgitters 45, sofern es sich bei der Antriebsmaschine 1 um eine Gasturbine handelt, und/oder durch den Leistungsregler 42.

Ferner ist es vorteilhaft, die Schaltelemente bzw. deren übertragbaren Drehmomente im Gangwechselgetriebe 5 in Abhängigkeit vom Lastdrehmoment zu steuern, was durch den Sensor 56 möglich ist, um weiche Schaltvorgänge zu erreichen. Darüberhinaus eignet sich die erfindungsgemäße Getriebeanordnung mit Synchronisierelement besonders gut auch für Antriebsanlagen, bei welchen Bremsvorgänge durch Hochdrehen der Antriebsmaschine 1, im Falle einer Gasturbine beispielsweise durch Hochdrehen der Arbeitsturbine 4, vorgenommen werden. Ferner eignet sich die erfindungsgemäße Getriebeanordnung mit Synchronisierelement auch besonders gut für Antriebsanlagen, bei welchen Bremsvorgänge durch Rückschaltungen im Gangwechselgetriebe 5 bewirkt werden.

Dem Gangwechselgetriebe 5 vorgeschaltete Vorschaltgetriebe können entsprechend dem Getriebe 22 von Fig. 2 ein Untersetzungsgetriebe, ein Übersetzungsgetriebe, ein Wendegetriebe beispielsweise 36, 37, 38 nach Fig. 3 oder ein Gruppengetriebe sein, mit welchem die Anzahl der mit dem Gangwechselgetriebe 5 schaltbaren Gängen verdoppelbar ist.

**Patentansprüche**

1. Unter Last schaltbare mechanische Getriebeanordnung mit einem unter Last schaltbarem mechanischen Gangwechselgetriebe (5),
dadurch gekennzeichnet,
daß im Antriebsstrang zwischen dem Gangwechselgetriebe (5) und einer Antriebsmaschine (1) ein Synchronisierelement (4; 23; 33, 34; 47) angeordnet ist, dessen ohne Schlupf übertragbares Drehmoment zwischen einem primären Teil (13) und einem relativ dazu bewegbaren sekundären Teil (14) beim Gangwechsel automatisch derart gesteuert oder geregelt wird, daß ein größerer Anteil der für den Schaltvorgang beim Gangwechsel erforderlichen Synchronisierarbeit von dem Synchronisierelement und der kleinere Anteil von den Schaltelementen (6, 7, 8) des Gangwechselgetriebes übernommen wird.

2. Getriebeanordnung nach Anspruch 1,
dadurch gekennzeichnet,
daß die Verbindung zwischen dem primären Teil (13) und dem sekundären Teil (14) des Synchronisierelements während eines Schaltvorganges nie vollständig unterbrochen wird.

3. Getriebeanordnung nach Anspruch 1 oder 2,
dadurch gekennzeichnet,
daß das Synchronisierelement (4; 23; 33, 34; 47) für länger dauernden Schlupfbetrieb zwischen primärem Teil und sekundärem Teil als die Schaltelemente (6, 7, 8) des Gangwechselgetriebes (5) ausgebildet ist.

4. Getriebeanordnung nach einem der Ansprüche 1 bis 3,
dadurch gekennzeichnet,
daß eine Steuer- oder Regeleinrichtung vorgesehen ist, welche automatisch bewirkt, daß
a) im normalen Fahrbetrieb, wenn nicht geschaltet wird, das übertragbare Drehmoment des Synchronisierelements (4;23;33,34;47) gleich oder größer als das Lastdrehmoment der Antriebsmaschine (1) ist, und das übertragbare Drehmoment der Schaltelemente (6,7,8) des Gangwechselgetriebes (5) ebenfalls gleich oder größer als das Lastdrehmoment der Antriebsmaschine ist,
b) während des Schaltvorganges im Gangwechselgetriebe (5) das übertragbare Drehmoment des Synchronisierelements kleiner ist als das übertragbare Drehmoment der während des Schaltvorganges mit Schlupf arbeitenden Schaltelemente des Gangwechselgetriebes, und
c) nach Abschluß des Schaltvorganges des Gangwechselgetriebes das übertragbare Drehmoment des Synchronisierelements kleiner als das übertragbare Drehmoment der Schaltelemente des Gangwechselgetriebes, jedoch größer als das Lastdrehmoment der Antriebsmaschine ist, zumindest so lange, bis die Drehzahl des primären Teils gleich der Drehzahl des sekundären Teils des Synchronisierelements ist.

5. Getriebeanordnung nach einem der Ansprüche 1 bis 4,
dadurch gekennzeichnet,
daß die automatische Steuerung oder Regelung des übertragbaren Drehmoments des Synchronisierelements (4; 23; 33, 34; 47) und der Schaltelemente (6, 7, 8) des Gangwechselgetriebes (5) in Abhängigkeit vom Lastdrehmoment (Sensoren 42 und 56) der Antriebsmaschine (1) und in Abhängigkeit von der Drehzahldifferenz zwischen dem primären Teil (13; Sensor 50) und dem sekundären Teil (14; Sensor 52) des Synchronisierelements erfolgt.

6. Getriebeanordnung nach einem der Ansprüche 1 bis 5,
dadurch gekennzeichnet,
daß ein oder mehrere Schaltelemente (33,34) oder Stützelemente (23) von dem Gangwechselgetriebe (5) vorgeschalteten mechanischen Vorschaltgetrieben (22; 36, 37, 38) als das automatisch steuerbare oder regelbare Synchronisierelement ausgebildet sind.

7. Getriebeanordnung nach einem der Ansprüche 1 bis 6,
dadurch gekennzeichnet,
daß das im Gangwechselgetriebe (5) von dessen Schaltelementen (6, 7, 8) übertragbare Drehmoment von der Steuer- bzw. Regeleinrichtung jeweils sofort nach Abschluß des Schaltvorganges automatisch über das Lastdrehmoment der Antriebsmaschine (1) gesteigert wird, vorzugsweise in Abhängigkeit von der Eingangsdrehzahl (Sensor 52) und der Ausgangsdrehzahl (Sensor 54) des Gangwechselgetriebes und von dem Lastzustand (Sensor 56) der Antriebsmaschine.

8. Getriebeanordnung nach einem der Ansprüche 1 bis 7,
dadurch gekennzeichnet,
daß während eines Schaltvorganges im Gangwechselgetriebe (5) und des Synchronisiervorganges des Synchronisierelements (4; 23; 33, 34; 47) das Lastdrehmoment der Antriebsmaschine (1) automatisch beeinflußt, vorzugsweise reduziert wird (42, 56, 59, 46).

9. Getriebeanordnung nach einem der Ansprüche 1 bis 8,
dadurch gekennzeichnet,
daß die für den Schalt- und Synchronisiervorgang vorgeschenen Teile an ein Bremssystem (68, 69) zum Zwecke der Bremsung durch Schaltvorgänge im Gangwechselgetriebe (5) angeschlossen sind und dabei diese Teile in gleicher oder ähnlicher Weise funktionieren wie bei normalen Schaltvorgängen.

## Claims

1. Mechanical gear arrangement, which can be shifted under load, with a mechanical change gear which can be shifted under load, characterised in that in the drive line between the change gear (5) and a prime mover (1) there is arranged a synchronising element (4; 23; 33, 34; 47) whose torque, which can be transmitted without slipping, is so automatically controlled or regulated between a primary part and a secondary part, movable relative to the primary part, during the gear change that a larger proportion of the synchronising work required for the shifting process when changing gear is effected by the synchronising element and a smaller proportion is effected by the shifting elements (6, 7, 8) of the change gear.

2. Gear arrangement according to claim 1, characterised in that the connection between tne primary part (13) and the secondary part (14) of the synchronising element is never fully interrupted during a shifting process.

3. Gear arrangement according to claim 1 or 2, characterised in that the synchronising element (4; 23; 33, 34; 47) is constructed as the shifting elements (6, 7, 8) of the change gear (5) for prolonged slip operation between the primary part and secondary part under load.

4. Gear arrangement according to one of claims 1 to 3, characterised in that a control or regulating device is provided, which automatically ensures that
a) in normal driving operation, when the gear is not being shifted, the transmissible torque of the synchronising element (4; 23; 33, 34; 47) is equal to or higher than the loading torque of the prime mover (1) and the transmissible torque of the shifting elements (6, 7, 8) of the change gear (5) is also equal to or higher than the loading torque of the prime mover,
b) during the shifting process, when changing gear in the change gear (5), the transmissible torque of the synchronising element is lower than the transmissible torque of the shifting elements of the change gear operating with slip during the shifting process, and
c) after completion of the shifting process of the change gear, the transmissible torque of the synchronising element is lower than the transmissible torque of the shifting elements of the change gear but is higher than the loading torque of the prime mover, at least until the speed of the primary part is equal to the speed of the secondary part of the synchronising element.

5. Gear arrangement according to one of claims 1 to 4, characterised in that the automatic control or regulation of the transmissible torque of the synchronising element (4; 23; 33, 34; 47) and the shifting elements (6, 7, 8) of the change gear (5) is effected as a function of the loading torque (sensors 42 and 56) of the prime mover (1) and as function of the difference in speed between the primary part (13; sensor 50) and the secondary part (14; sensor 52) of the synchronising element.

6. Gear arrangement according to one of claims 1 to 5, characterised in that one or more shifting elements (33, 34) or supporting elements (23) of mechanical series gears (22; 36, 37, 38), connected in series to the change gear (5), form the automatically controllable or regulated synchronising element.

7. Gear arrangement according to one of claims 1 to 6, characterised in that the torque which can be transmitted in the change gear (5) by its shifting elements (6, 7, 8) is automatically increased by the loading torque of the prime mover (1) immediately after completion of the shifting process by the controlling or regulating device, preferably as a function of the input speed (sensor 52) and output speed (sensor 54) of the change gear and as a function of the loading condition (sensor 56) of the prime mover.

8. Gear arrangement according to one of claims 1 to 7, characterised in that, during a shifting process of the change gear (5) and the synchronising process of the synchronising element (4; 23; 33, 34; 47), the loading torque of the prime mover (1) is automatically influenced, preferably reduced (42, 56, 59, 46).

9. Gear arrangement according to one of claims 1 to 8, characterised in that the parts provided for the shifting and synchronising process are connected to a braking system (68, 69) for the purpose of braking through shifting processes in the change gear (5), wherein these parts operate in the same or similar manner as in normal shifting processes.

## Revendications

1. Disposition mécanique de transmission pouvant être manoeuvré en charge munie d'un mécanisme de changement de vitesse mécanique pouvant être manoeuvrée en charge, caractérisée en ce que dans la chaîne d'entraînement entre le mécanisme de changement de vitesse (5) et une machine d'entraînement (1) est disposé un élément de synchronisation (4; 23; 33, 34; 47) dont le couple transmissible sans patinage entre une partie primaire et une partie secondaire mobile relativement à celle-ci est commandé ou réglé automatiquement lors du changement de vitesse de telle sorte qu'une majeure partie du travail de synchronisation nécessaire au processus de manoeuvre lors du changement de vitesse est assumée par l'élément de synchronisation et la mineure partie par les éléments de manoeuvre (6, 7, 8) du mécanisme de changement de vitesse.

2. Disposition de transmission selon la revendication 1, caractérisée en ce que la liaison entre la partie primaire (13) et la partie secondaire (14) de l'élément de synchronisation ne s'interrompt jamais complètement pendant un processus de manoeuvre.

3. Disposition de transmission selon l'une des revendications 1 et 2, caractérisée en ce que l'élément de synchronisation (4; 23; 33, 34; 47) est conçu pour un fonctionnement en patinage de plus longue durée entre partie primaire et partie secondaire en charge que les éléments de manoeuvre (6, 7, 8) du mécanisme de changement de vitesse (5).

4. Disposition de transmission selon l'une des revendications 1 à 3, caractérisé par le fait qu'il est prévu un dispositif de commande ou de régulation qui fait automatiquement en sorte:

a) que dans le service normal de conduite, lorsqu'on ne manoeuvre pas, le couple transmissible de l'élément de synchronisation (4; 23, 33, 34; 47) soit égal ou supérieur au couple de charge de la machine d'entraînement (1) et que le couple transmissible des éléments de manoeuvre (6, 7, 8) du mécanisme de changement de vitesse (5) soit également égal ou supérieur au couple de charge de la machine d'entraînement,

b) que pendant le processus de manoeuvre lors du changement de vitesse dans le mécanisme de changement de vitesse (5), le couple transmissible de l'élément de synchronisation soit plus petit que le couple transmissible des éléments de manoeuvre du mécanisme de changement de vitesse fonctionnant avec patinage pendant le processus de changement, et

c) qu'après la fin du processus de manoeuvre du mécanisme de changement de vitesse, le couple transmissible de l'élément de synchronisation soit inférieur au couple transmissible des éléments de manoeuvre du mécanisme de changement de vitesse, mais supérieur au couple de charge de la machine d'entraînement, du moins jusqu'à ce que la vitesse de rotation de la partie primaire soit égale à la vitesse de rotation de la partie secondaire de l'élément de synchronisation.

5. Disposition de transmission selon l'une des revendications 1 à 4, caractérisée en ce que la commande ou régulation automatique du couple transmissible de l'élément de synchronisation (4; 23; 33, 34; 47) et des éléments de manoeuvre (6, 7, 8) du mécanisme de changement de vitesse (5) s'effectue sous la dépendance du couple de charge (capteurs 42 et 56) de la machine d'entraînement (1) et sous la dépendance de la différence de vitesse de rotation entre la partie primaire (13; capteur 50) et la partie secondaire (14; capteur 52) de l'élément de synchronisation.

6. Disposition de transmission selon l'une des revendications 1 à 5, caractérisée en ce qu'un ou plusieurs éléments de manoeuvre (33, 34) ou éléments de soutien (23) sont constitués par des transmissions mécaniques d'interposition (23; 36, 37, 38) interposées avant le mécanisme de changement de vitesse (5), en tant qu'élément de synchronisation pouvant être commandé ou réglé automatiquement.

7. Disposition de transmission selon l'une des revendications 1 à 6 caractérisée en ce que le couple transmissible dans le mécanisme de changement de vitesse (5) par les éléments de manoeuvre (6, 7, 8) est accru par le dispositif de commande ou de régulation, chaque fois immédiatement après la fin du processus de manoeuvre, par l'intermédiaire du couple de charge de la machine d'entraînement (1), de préférence sous la dépendance de la vitesse de rotation d'entrée (capteur 52) et de la vitesse de rotation de sortie (capteur 54) du mécanisme de changement de vitesse etsous la dépendance de l'état de charge (capteur 56) de la machine d'entraînement.

8. Disposition de transmission selon l'une des revendications 1 à 7, caractérisée en ce que pendant un processus de manoeuvre du mécanisme de changement de vitesse (5) et le processus de synchronisation de l'élément de synchronisation (4; 23; 33, 34; 47), le couple de charge de la machine d'entraînement (1) est influencé automatiquement, de préférence réduit (42, 56, 59, 46).

9. Disposition de transmission selon l'une des revendications 1 à 8, caractérisée en ce que des parties prévues pour le processus de manoeuvre et de synchronisation sont raccordées à un système de freinage (68, 69) aux fins de freinage par des processus de manoeuvre dans le mécanisme de changement de vitesse (5) et que ces parties fonctionnent de la même façon que lors de processus normaux de manoeuvre, ou de façon analogue.

FIG.1

FIG.2

FIG.3

FIG.4